# FASCICULE DE BREVET EUROPEEN

(11) **EP 1 344 280 B1**
(45) Date de publication et mention de la délivrance du brevet: **02.09.2009**
(21) Numéro de dépôt: 01995735.6
(22) Date de dépôt: 18.12.2001
(51) Int. Cl.: H01Q 1/24, H04B 1/38, H01Q 17/00

(54) **DISPOSITIF DE DECOUPLAGE DE RESONANCE POUR LA PROTECTION DU CORPS HUMAIN OU ANIMAL**
RESONANZENTKOPPELEINRICHTUNG ZUM SCHUTZ DES KÖRPERS EINES MENSCHEN ODER EINES TIERES
RESONANCE DECOUPLING DEVICE FOR PROTECTING A HUMAN OR ANIMAL BODY

(30) Priorité: 18.12.2000 FR 0016499; 27.04.2001 FR 0105738
(43) Date de publication de la demande: 17.09.2003
(73) Titulaire: Bonnabaud, Marie-Claude, 13012 Marseille (FR)
(72) Inventeur: Bonnabaud, Marie-Claude, 13012 Marseille (FR)
(86) Numéro de dépôt international: PCT/FR2001/004041
(87) Numéro de publication internationale: WO 2002/050946

(56) Documents cités:
- WO-A-85/02265
- US-A- 3 568 196
- US-A- 4 414 339

## Description

La présente invention se rapporte au domaine de la protection du corps humain ou animal.

La présente invention se rapporte plus particulièrement à un dispositif de découplage de résonance, pour la protection du corps humain ou animal.

Il est connu que le corps humain ou animal capte les signaux électromagnétiques présents dans son environnement, comme par exemple les signaux électromagnétiques émis par les appareils électroniques et/ou électriques tels que les téléphones portables, les ordinateurs, les consoles de jeux, ... Ces signaux peuvent avoir une influence néfaste sur la santé. L'art antérieur US 3,039,172 décrit un vêtement imprégné de particules colloïdales pour la protection de personnes contre les ondes éléctromagnétiques.

Il est également connu que le corps humain ou animal possède ses propres signaux électromagnétiques.

La présente invention entend proposer un dispositif pour la protection du corps humain ou animal permettant de provoquer un découplage de résonance entre les signaux électromagnétiques présents dans l'environnement dudit corps et les signaux électromagnétiques captés par ledit corps.

Pour ce faire, la présente invention est du type décrit ci-dessus et elle est remarquable, dans son acception la plus large, en ce que le dispositif est comme décrit dans la revendication 1.

Le découplage est effectué en cadençant des complexes de solutions colloïdales sur des zones spectrales larges, et notamment dans les zones utilisées par les appareils électroniques et/ou électriques. Ces conditions ont pour effet de piloter les circuits nerveux, responsables de la biocybernétique de l'organisme humain, à la manière des systèmes utilisés pour régler en permanence l'heure des horloges conduites par satellite.

Dans une variante de l'invention, ledit support est constitué par un article de bijouterie, du type montre, collier, boucle d'oreille, paires de lunettes, boucle de ceinture.

Dans une variante préférée de l'invention, ledit support est constitué par un bracelet.

Dans une autre variante de l'invention, ledit support est constitué par un élément mobilier, du type table, chaise, lampe, horloge.

Dans une autre variante de l'invention, ledit support est constitué par un article de confection, du type vêtement, chaussure, chapeau, casquette.

Dans une autre variante de l'invention, ledit support est constitué par un appareil électronique et/ou électrique du type ordinateur, téléphone et notamment téléphone portable, jeu électronique, écouteur, haut-parleur et notamment haut-parleur portatif.

Les systèmes colloïdaux sont de préférence piégés dans une matrice ou dans une capsule.

Les systèmes colloïdaux comportent de préférence des micelles de taille inférieure ou égale à 0,001 micron.

Lesdits systèmes colloïdaux sont de préférence cadencés en utilisant un complexe d'ondes de formes modulées spécifiques et d'amplitude plus faible et de fréquence plus haute que l'onde porteuse caractéristique utilisée relative à un ou à plusieurs appareil(s) électronique(s) et/ou électrique(s) contre lesquels on entend se prémunir.

La présente invention se rapporte également à un procédé pour la réalisation d'un dispositif de découplage par résonance comme décrit dans la revendication 10.

Le balayage séquentiel de fréquences spécifiques de la solution A est réalisé à l'aide d'un générateur de fréquences à induction d'ondes sinusoïdales et successives et le balayage séquentiel de fréquences spécifiques de la solution B est réalisé à l'aide d'un générateur de fréquences à micro-impulsions avec inducteurs de polarités inverses générant une onde de modulation rectangulaire.

L'étape de repos sous vide de la solution C dure au moins 24 heures.

Le procédé est opéré à une température de 25°C.

Ce procédé présente essentiellement deux variantes. La première variante permet de réaliser un dispositif spécifique adapté à la protection vis-à-vis d'un appareil électronique et/ou électrique particulier et la deuxième variante permet de réaliser un dispositif général, adapté à la protection vis-à-vis de tous les appareils électroniques et/ou électriques habituels, nocifs.

Dans une première variante, le balayage de fréquences de la solution A est opéré entre 0 et 2 GHz selon des séquences déterminées et dure environ 20 minutes.

Le balayage de fréquences de la solution B est opéré selon des séquences déterminées dont l'onde porteuse fondamentale ne dépasse pas 20 kHz, à une fréquence propre à un ou plusieurs appareil(s) électronique(s) et/ou électrique(s) et dure environ 30 minutes.

Le traitement de chaque solution correspond à la fabrication d'un dispositif de protection prévu contre un ou plusieurs appareil(s) électronique(s) et/ou électrique(s) précis car le choix des séquences dépend des propres fréquences de cet ou de ces appareil(s) électronique(s) et/ou électrique(s).

Dans une deuxième variante, le balayage de fréquences de la solution A est opéré systématiquement entre 0 et 10¹³ Hz et dure environ 8 minutes. La solution A comporte, pendant le balayage de fréquences, une pièce de Schorl non taillée.

Le balayage de fréquences de la solution B est opéré systématiquement de 0 à 10¹³ Hz et dure environ 8 minutes. La solution B comporte, pendant le balayage de fréquences, une pièce taillée de cristal de quartz.

L'étape de repos sous vide de la solution C dure au moins 72 heures.

Cette étape C est de préférence opérée à une température de 35°C.

Quelle que soit la variante, après l'étape de repos, la solution C est de préférence soit piégée dans au moins une matrice, soit encapsulée dans au moins une capsule.

Avantageusement, un dispositif réalisé par la mise en oeuvre de la première variante du procédé permet de se prémunir de l'action d'appareils personnels que l'on utilise souvent.

Avantageusement, un dispositif réalisé par la mise en oeuvre de la deuxième variante du procédé permet de se prémunir de l'action de tous les appareils utilisés communément dans l'entourage du dispositif. Ce dispositif réalisé par exemple sous forme d'un bracelet permet ainsi de se protéger contre les émissions d'ondes électromagnétiques dans les environnements où elles sont particulièrement présentes du fait notamment de l'utilisation intensive d'appareils électroniques et/ou électriques par d'autres utilisateurs, comme par exemple, dans les aéroports ou dans les gares.

On comprendra mieux l'invention à l'aide de la description, faite ci-après à titre purement explicatif, d'un mode de réalisation de l'invention. Cette description est faite en ce qui concerne les possibilités d'application de la présente invention, en référence aux figures annexées :
- la figure 1 illustre une vue en perspective, partielle, éclatée, d'un bracelet selon l'invention comportant une capsule ; et
- la figure 2 illustre une vue en perspective, partielle du bracelet de la figure 1 assemblé.

Le dispositif selon l'invention est un dispositif de découplage de résonance entre les signaux électromagnétiques émis par des appareils électroniques et/ou électriques et les signaux électromagnétiques captés par le corps humain.

Le dispositif selon l'invention est caractérisé en ce qu'il est constitué par un support destiné à être placé de préférence en contact avec le corps en situation d'utilisation, ledit support comportant au moins un complexe de systèmes colloïdaux en phase dispersante, lesdits systèmes colloïdaux étant constitués de polymères traités et cadencés.

Lesdits systèmes colloïdaux sont constitués de polymères traités par au moins un générateur d'ondes spécifiques, et de préférence deux générateurs d'ondes spécifiques. Lesdits systèmes colloïdaux sont cadencés en utilisant un complexe d'onde de formes modulées spécifiques et d'amplitude plus faible et de fréquence plus haute que l'onde porteuse caractéristique utilisée relative à ou aux appareil(s) électronique(s) et/ou électrique(s) contre lesquels on entend se prémunir.

Lesdits systèmes colloïdaux sont piégés dans une matrice ou sont disposés dans une capsule (10), entièrement remplie et exempte de bulle et d'air.

### Inventaire du matériel minimum nécessaire à la réalisation du dispositif :

- un générateur de fréquences à induction d'ondes sinusoïdales et successives (Générateur 1),
- un générateur de fréquences à micro-impulsions avec inducteurs de polarités inverses générant une onde de modulation rectangulaire (Générateur 2),
- deux blocs ferromagnétiques de dimensions suivantes : 75 x 75 x 380 mm,
- deux flacons de Xx500 ml en verre blanc,
- un flacon de Xx1000 ml en verre brun,
- une enceinte thermostatique avec circulation d'air,
- des bouchons absorbeurs,
- deux solutions colloïdales aux micelles de taille inférieure ou égale à 0,001 micron de formule :
   - (CaNa) (2Al₅) (Si₅O₂₀) (6H₂0) pour l'une (solution A) et,
   - (CaNaMgFeAlTi) (SiAl) 2(O₆) pour l'autre (solution B),
- de l'eau distillée (Eau D) qui sert de solvant aux solutions A et B lors de la réalisation des solutions.

X est un nombre.

### Présentation des différentes étapes de réalisation de la première variante du procédé :

1)- Dans un flacon de verre blanc de Xx500 ml, verser Xx425 ml de solution A présentant une concentration en micelle de l'ordre de 0,3 ‰. Le flacon bouché ainsi rempli doit se situer à une distance d'environ 25 cm de chaque bloc ferromagnétique. Le tout doit être placé dans une enceinte thermostatique à circulation d'air. Les deux blocs sont reliés au générateur 1. Temps d'action : 20 minutes. Le balayage séquentiel de fréquences est situé entre 0 et 2 GHz, de environ 0,1Hz à 2 GHz. Chaque balayage est spécifique et correspond à la fabrication d'un dispositif de protection prévu contre un appareil électronique et/ou électrique particulier puisque dépendant des propres fréquences de cet appareil.
   Le balayage est effectué, par exemple, par séquences de 100 Hz, jusqu'à 10MHz, puis par séquences de 500 Hz jusqu'à 2 GHz et ce, suivant des trains d'ondes sinusoïdales, alternatives et successives. Un temps de pause de 7 secondes est observé toutes les 11 secondes. Le temps de croissance de chaque impulsion de l'onde porteuse est égal à son temps de décroissance et est de l'ordre de + et - 10⁻² seconde.
2)- Dans un flacon de verre blanc de Xx500 ml, verser Xx425 ml de solution B présentant une concentration en micelle de l'ordre de 0,5 ‰. Le flacon bouché ainsi rempli doit se situer à une distance d'environ 25 cm de chaque bloc ferromagnétique. Le tout doit être placé dans une enceinte thermostatique à circulation d'air. Les deux blocs sont reliés au générateur 2. Temps d'action 30 minutes. Le balayage est spécifique et correspond à la fabrication d'un dispositif de protection prévu contre un ou plusieurs appareil(s) électronique(s) et/ou électrique(s) particulier(s) puisque dépendant des propres fréquences de cet ou de ces appareil(s).
   Le balayage est effectué, par exemple, par séquences de 7,8 Hz en respectant un temps de pause de 1 seconde après chaque impulsion de 1 seconde. La fréquence de l'onde porteuse fondamentale ne dépasse pas 20kHz. L'onde modulée est rectangulaire. Le balayage séquentiel est effectué suivant des micro-impulsions alternatives à pente d'attaque très brutale dont le temps de croissance est supérieur à leur temps de décroissance et est respectivement de l'ordre de +10⁻⁸ seconde et de +10⁻³ seconde, puis de -10⁻⁸ seconde et de -10⁻³ seconde.
3)- Transvaser solutions A et B dans un flacon de Xx1000 ml en verre brun pour obtenir la solution C.
4)- Conserver la solution C dans une enceinte thermostatique dans laquelle le vide aura été fait.
5)- Au bout de 24 heures minimum, la solution C est prête. Elle peut alors être piégée dans une matrice, par exemple en matériau composite ou encapsulée dans une capsule.

La fabrication doit se faire à une température de 25° C (+ ou - 0,5°).

### Présentation des différentes étapes de réalisation de la deuxième variante du procédé :

1)- Dans un flacon de verre blanc de Xx500 ml, verser Xx425 ml de solution A présentant une concentration en micelle de l'ordre de 0,2 ‰. Le flacon bouché ainsi rempli doit se situer à une distance d'environ 25 cm de chaque bloc ferromagnétique. Le tout doit être placé dans une enceinte thermostatique à circulation d'air. Les deux blocs sont reliés au générateur 1. Temps d'action : 8 minutes. Le balayage séquentiel de fréquences est situé entre 0 et 10¹³ Hz, de environ 0,1Hz à 10¹³ Hz. Le balayage est effectué d'une manière systématique jusqu'à la fréquence limite de 10¹³ Hz. L'onde fondamentale utilisée est impérativement accompagnée d'ondes de plus faible amplitude.
   Le balayage est effectué, par exemple, par séquences de 100 Hz, jusqu'à 10MHz, puis par séquences de 500 Hz jusqu'à 10¹³ Hz et ce, suivant des trains d'ondes sinusoïdales, alternatives et successives. Un temps de pause de 1 seconde est observé toutes les 1 secondes. Le temps de croissance de chaque impulsion de l'onde porteuse est égal à son temps de décroissance et est de l'ordre de + et - 10⁻² seconde.
   La préparation est de préférence réalisée en présence d'une pièce de Schorl (tourmaline), non taillée, immergée dans la solution A pendant la préparation physique de cette solution, puis retirée avant mélange de la solution A avec la solution B. Cette pièce de Schorl est telle que le volume de la solution A augmente de Xx10 ml.
2)- Dans un flacon de verre blanc de Xx500 ml, verser Xx425 ml de solution B présentant une concentration en micelle de l'ordre de 0,3 ‰. Le flacon bouché ainsi rempli doit se situer à une distance d'environ 25 cm de chaque bloc ferromagnétique. Le tout doit être placé dans une enceinte thermostatique à circulation d'air. Les deux blocs sont reliés au générateur 2. Temps d'action 8 minutes.
   Le balayage est effectué d'une manière systématique de 0 à 10¹³ Hz, par exemple par séquences de 1 kHz en respectant un temps de pause de 1 seconde après chaque impulsion de 1 seconde. La fréquence de l'onde associée à l'onde porteuse fondamentale ne dépasse pas 10¹³ Hz. L'onde modulée est rectangulaire. Le balayage séquentiel est effectué suivant des micro-impulsions alternatives à pente d'attaque très brutale dont le temps de croissance est supérieur à leur temps de décroissance et est respectivement de l'ordre de +10⁻⁸ seconde et de +10⁻³ seconde, puis de -10⁻⁸ seconde et de -10⁻³ seconde.
   La préparation est de préférence réalisée en présence d'une pièce de cristal de quartz, taillée, immergée dans la solution B pendant la préparation physique de cette solution, puis retirée avant mélange de la solution B avec la solution A. Cette pièce de cristal de quartz est telle que le volume de la solution B augmente de Xx5 ml.
3)- Transvaser solutions A et B dans un flacon de Xx1000 ml en verre brun pour obtenir la solution C.
4)- Conserver la solution C dans une enceinte thermostatique dans laquelle le vide aura été fait, à une température de 35° C (+ ou - 0,5°).
5)- Au bout de 72 heures minimum, la solution C est prête. Elle peut alors être piégée dans une matrice, par exemple en matériau composite ou encapsulée dans une capsule.

Le respect de toutes ces conditions permet d'obtenir un produit efficace et stable pendant au moins trois ans.

Dans les deux variantes du procédé, un "enregistrement" de fréquences modifiant la structure initiale des arrangements moléculaires des solutions de base a donc été réalisé qui pourra être lu par un matériel adéquat. Dans le cas présent, ce sont les signaux qu'émettent et reçoivent les cellules vivantes qui liront la solution C ainsi "informée" et "enregistrée".

La réalité du système de découplage selon l'invention a été vérifiée sur des prélèvements sanguins.

Toute substance est capable d'afficher un sens de polarisation à la lumière. Il a été constaté que la polarisation rotatoire était inversée par rapport à la normale lors des utilisations des outils précités (téléphones portables, ordinateurs, consoles de jeux, ...) puis, qu'elle redevenait normale après quelques semaines d'utilisation de l'invention.

En outre, il a été constaté que lors des épreuves à l'effort musculaire, l'invention permet une fatigabilité réduite de moitié dans un même temps donné ; ceci étant le signe conventionnellement admis d'une meilleure "veille immunologique".

En outre également, les tests effectués sur le comportement des systèmes nerveux central et végétatif humains, démontrent que les interférences nerveuses généralement constatées au niveau des racines émergeant de la moelle épinière ainsi que dans leurs zones métamériques correspondantes, lors de l'utilisation des appareils électroniques et/ou électriques précités, disparaissent en quelques semaines après l'utilisation de notre invention.

Le déclenchement des mouvements ioniques du milieu intérieur humain généralement perturbés lors de l'utilisation des appareils électroniques et/ou électriques précités, retrouve son fonctionnement normal au bout de quelques semaines après le début de l'utilisation de l'invention.

Les appareils électroniques et/ou électriques d'utilisation personnelle produisent certains signaux identiques aux signaux biologiques. En effet, la courbe logarithmique de répartition des zones spectrales de fréquences utilisées lors des communications intercellulaires humaines, indique que les deux systèmes (appareil informatique/électronique /électrique et corps humain) fonctionnent sur de nombreuses fréquences communes et donc peuvent entrer en résonance. La seule condition pour éviter cette entrée en résonance est de provoquer une autre résonance plus proche de "l'étalon biologique" et donc capable de provoquer une action découplante d'avec les entrées en résonance susceptibles d'engendrer des effets biologiques nocifs.

Les modes d'utilisation d'une solution C piégée dans une matrice ou encapsulée dans une capsule entièrement remplie de solution C sont nombreux.

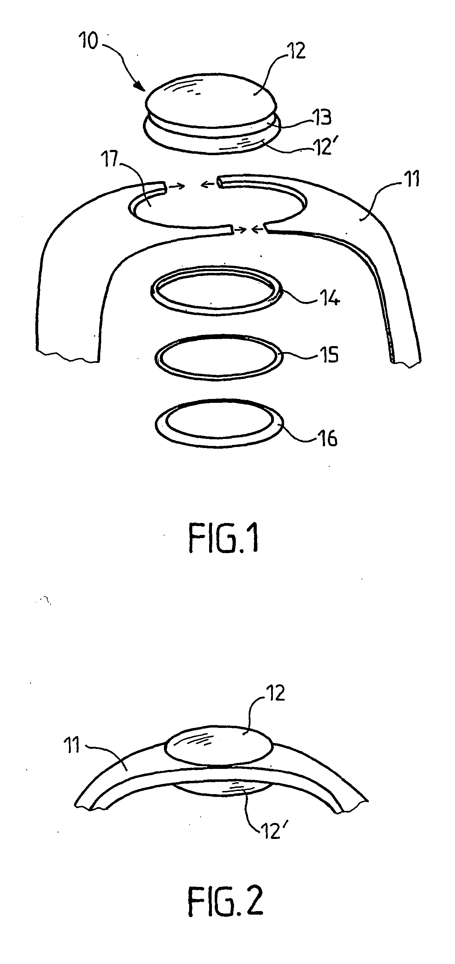

Les figures 1 et 2 illustrent un mode de réalisation de l'invention dans lequel le support est constitué par un bracelet (11) comportant une capsule (10).

La capsule (10) est constituée de deux demi-coques (12, 12') présentant des ouvertures circulaires et assemblées selon ces ouvertures. L'assemblage des deux demi-coques réalise une gorge (13) circulaire dans laquelle est positionnée une couronne de fermeture (14), puis un joint de caoutchouc (15) et une couronne de blocage (16).

L'ensemble est ensuite inséré dans un trou (17) ménagé dans le bracelet (11). Des moyens de fermeture du bracelet peuvent être prévus pour faciliter la fermeture du bracelet sur la capsule selon les flèches.

La capsule (10) présente un diamètre d'environ 30 millimètre et une hauteur d'environ 15 millimètres. Son volume intérieur est d'au moins 8 ml. La capsule (10) est entièrement remplie de solution C. Il n'y a ni bulles, ni air. La demi-coque (12) supérieure présente de préférence une surface opaque et la demi-coque (12') inférieure, en contact avec la peau, présente de préférence une surface transparente. En outre, le bracelet est de préférence réalisé galbé, afin qu'il ne tourne pas autour du bras et soit toujours correctement positionné.

Dans l'exemple cité ci-dessus, la capsule (10) constitue un élément d'ornementation, mais il est bien sûr possible d'envisager qu'une capsule soit disposée, sous un boîtier de montre. Il est même possible de réaliser la capsule sous forme de pastille adhérant directement à la peau grâce à un adhésif.

Il est possible d'intégrer une ou plusieurs matrices piégées de solution C et/ou une ou plusieurs capsules pleines de solution C dans des articles de confection. Par exemple, il est possible d'utiliser une technique de microencapsulation de fibres textiles. Dans le cas des chaussures, la ou les capsules peuvent être intégrées aux semelles.

Il est également possible d'intégrer une ou plusieurs matrices piégées de solution C et/ou une ou plusieurs capsules pleines de solution C dans des éléments mobiliers.

Il est également possible d'intégrer une ou plusieurs matrices piégées de solution C et/ou une ou plusieurs capsules pleines de solution C directement dans les appareils électroniques et/ou électriques contre l'action desquels on entend se prémunir. Par exemple, il est possible d'intégrer une capsule directement dans le boîtier de protection de l'appareil ou dans un boîtier adaptable sur le boîtier de base.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif de découplage de résonance, pour la protection du corps humain ou animal, **caractérisé en ce qu'**il est constitué par un support destiné à être placé de préférence en contact avec le corps en situation d'utilisation, ledit support comportant au moins un complexe de systèmes colloïdaux en phase dispersante, lesdits systèmes colloïdauX étant constitués de polymères traités et cadencés et comportent cumulativement les micelles suivantes: (CaNa) (2Al₅) (Si₅O₂₀) (6H₂O) et (CaNaMgFeAlTi) (SiAl) 2(O)₆.

2. Dispositif selon la revendication 1, **caractérisé en ce que** ledit support est constitué par un bracelet (11).

3. Dispositif selon la revendication 1, **caractérisé en ce que** ledit support est constitué par un article de bijouterie, du type montre, collier, boucle d'oreille, paires de lunettes, boucle de ceinture.

4. Dispositif selon la revendication 1, **caractérisé en ce que** ledit support est constitué par un élément mobilier, du type table, chaise, lampe, horloge.

5. Dispositif selon la revendication 1, **caractérisé en ce que** ledit support est constitué par un article de confection, du type vêtement, chaussure, chapeau, casquette.

6. Dispositif selon la revendication 1, **caractérisé en ce que** ledit support est constitué par un appareil électronique et/ou électrique du type ordinateur, téléphone et notamment téléphone portable, jeu électronique, écouteur, haut-parleur et notamment haut-parleur portatif.

7. Dispositif selon l'une quelconque des revendications précédentes, **caractérisé en ce que** lesdits systèmes colloïdaux sont piégés dans une matrice ou sont disposés dans une capsule (10).

8. Dispositif selon l'une quelconque des revendications précédentes, **caractérisé en ce que** lesdits systèmes colloïdaux comportent des micelles de taille inférieure ou égale à 0,001 micron.

9. Dispositif selon l'une quelconque des revendications précédentes, **caractérisé en ce que** lesdits systèmes colloïdaux sont cadencés en utilisant un complexe d'ondes de formes modulées spécifiques et d'amplitude plus faible et de fréquence plus haute que l'onde porteuse caractéristique utilisée relative à un ou à plusieurs appareil(s) électronique(s) et/ou électrique(s) contre lesquels on entend se prémunir.

10. Procédé pour la réalisation d'un dispositif de découplage de résonance, pour la protection du corps humain ou animal, **caractérisé en ce que** l'on fait subir un balayage séquentiel de fréquences spécifiques à une solution A contenant Xx425 ml de solution colloïdale comportant au moins les micelles (CaNa) (2Al₅) (Si₅O₂₀) (6H₂O) puis **en ce que** l'on fait subir un balayage séquentiel de fréquences spécifiques à une solution B contenant Xx425 ml de solution colloïdale comportant au moins les micelles (CaNaMgFeAlTi) (SiAl) 2(O)₆, **en ce que** l'on mélange les solutions A et B afin de former une solution C et **en ce qu'**on laisse la solution C reposer sous vide, X étant un nombre.

11. Procédé selon la revendication 10, **caractérisé en ce que** lesdits systèmes colloïdaux comportent des micelles de taille inférieure ou égale à 0,001 micron.

12. Procédé selon la revendication 10 ou la revendication 11, **caractérisé en ce que** lesdits systèmes colloïdaux sont cadencés en utilisant un complexe d'ondes de formes modulées spécifiques et d'amplitude plus faible et de fréquence plus haute que l'onde porteuse caractéristique utilisée relative à un ou à plusieurs appareil(s) électronique(s) et/ou électrique(s) contre lesquels on entend se prémunir.

13. Procédé selon l'une quelconque des revendications 10 à 12, **caractérisé en ce que** le balayage séquentiel de fréquences spécifiques de la solution A est réalisé à l'aide d'un générateur de fréquences à induction d'ondes sinusoïdales et successives.

14. Procédé selon l'une quelconque des revendications 10 à 13, **caractérisé en ce que** le balayage séquentiel de fréquences spécifiques de la solution B est réalisé à l'aide d'un générateur de fréquences à microimpulsions avec inducteurs de polarités inverses générant une onde de modulation rectangulaire.

15. Procédé selon l'une quelconque des revendications 10 à 14, **caractérisé en ce que** l'étape de repos sous vide de la solution C dure au moins 24 heures.

16. Procédé selon l'une quelconque des revendications 10 à 15, **caractérisé en ce qu'**il est opéré à une température de 25 °C.

17. Procédé selon l'une quelconque des revendications 13 à 16, **caractérisé en ce que** le balayage de la solution A est opéré selon des séquences déterminées entre 0 et 2 GHz et dure environ 20 minutes.

18. Procédé selon l'une quelconque des revendications 14 à 17, **caractérisé en ce que** le balayage de fréquences de la solution B est opéré selon des séquences déterminées dont l'onde porteuse fondamentale ne dépasse pas 20 kHz, à une fréquence propre d'un ou de plusieurs appareil(s) électronique(s) et dure environ 30 minutes.

19. Procédé selon l'une quelconque des revendications 13 à 17, **caractérisé en ce que** le balayage de fréquences de la solution A est opéré systématiquement entre 0 et 10¹³ Hz et dure environ 8 minutes.

20. Procédé selon la revendication 19, **caractérisé en ce que** la solution A comporte une pièce de Schorl non taillée pendant le balayage de fréquences.

21. Procédé selon l'une quelconque des revendications 19 ou 20, **caractérisé en ce que** le balayage de fréquences de la solution B est opéré systématiquement de 0 à 10¹³ Hz et dure environ 8 minutes.

22. Procédé selon la revendication 21, **caractérisé en ce que** la solution B comporte une pièce taillée de cristal de quartz pendant le balayage de fréquences.

23. Procédé selon l'une quelconque des revendications 19 à 22, **caractérisé en ce que** l'étape de repos sous vide de la solution C dure au moins 72 heures.

24. Procédé selon l'une quelconque des revendications 19 à 23, **caractérisé en ce que** l'étape C est opérée à une température de 35 °C.

25. Procédé selon l'une quelconque des revendications 10 à 24, **caractérisé en ce qu'**après l'étape de repos, la solution C est piégée dans au moins une matrice ou est encapsulée dans au moins une capsule (10).

## Claims

1. Resonance decoupling device for protecting a human or animal body, comprising a support destined to be placed preferably in contact with the body under conditions of use, wherein the support comprises at least one complex of colloidal systems in a dispersed phase, wherein the colloidal systems are constituted of treated and cadenced polymers and cumulatively comprise the following micelles: (CaNa) (2Al₅) (Si₅O₂₀) (6H₂O) and (CaNaMgFeAlTi) (SiAl) 2(O)₆.

2. Device according to claim 1, wherein the support is constituted of a bracelet (11).

3. Device according to claim 1, wherein the support is constituted of a piece of jewelry, typically a watch, necklace, earring, pair of glasses or belt-buckles.

4. Device according to claim 1, wherein the support is constituted of a piece of furniture, typically a table, chair, lamp or clock.

5. Device according to claim 1, wherein the support is constituted of a garment, typically a clothing, shoe, hat or cap.

6. Device according to claim 1, wherein the support is constituted of an electronic and/or electric device, typically a computer, telephone, especially portable telephone, electronic game, headphones, speakers, especially portable speakers.

7. Device according to any of the aforementioned claims, wherein the colloidal systems are entrapped in a matrix or are disposed in a capsule (10).

8. Device according to any of the aforementioned claims, wherein the colloidal systems comprise micelles of a size less than or equal to 0.001 micron.

9. Device according to any of the aforementioned claims, wherein the colloidal systems are cadenced using a wave complex of specific modulated forms and an amplitude lower and a frequency higher than the characteristic carrier wave used relative to one or more electronic and/or electric device(s) against which it is desired to be protected.

10. Method for producing a resonance decoupling device for protecting a human or animal body, wherein a sequential scanning of specific frequencies is applied to a solution A containing Xx425 ml of colloid solution comprising at least the micelles (CaNa) (2Al₅) (Si₅O₂₀) (6H₂O), wherein thereafter sequential scanning of specific frequencies is applied to a solution B containing Xx425 ml of colloid solution comprising at least the micelles (CaNaMgFeAlTi) (SiAl) 2(O)₆, wherein solutions A and B are mixed to form a solution C and wherein solution C is allowed to rest under vacuum, wherein X is a number.

11. Method according to claim 10, wherein the colloidal systems comprise micelles of a size less than or equal to 0.001 micron.

12. Method according to claim 10 or 11, wherein the colloidal systems are cadenced using a wave complex of specific modulated forms and an amplitude lower and a frequency higher than the characteristic carrier wave used relative to one or more electronic and/or electric device(s) against which it is desired to be protected.

13. Method according to any of claims 10 to 12, wherein the sequential scanning of specific frequencies of solution A is performed with an induction frequency generator of sinusoidal and successive waves.

14. Method according to any of claims 10 to 13, wherein the sequential scanning of specific frequencies of solution B is performed with a microimpulsion frequency generator with inverse polarity inductors generating a wave of rectangular modulation.

15. Method according to any of claims 10 to 14, wherein the resting step under vacuum of solution C has a duration of at least 24 hours.

16. Method according to any of claims 10 to 15, which is implemented at a temperature of 25°C.

17. Method according to any of claims 13 to 16, wherein the scanning of solution A is implemented according to determined sequences between 0 and 2 GHz and has a duration of about 20 minutes.

18. Method according to any of claims 14 to 17, wherein the frequency scanning of solution B is implemented according to determined sequences, the fundamental carrier wave of which does not exceed 20 kHz, at an appropriate frequency of one or more electronic device(s) and has a duration of about 30 minutes.

19. Method according to any of claims 13 to 17, wherein the frequency scanning of solution A is implemented systematically between 0 and 10¹³ Hz and has a duration of about 8 minutes.

20. Method according to claim 19, wherein solution A contains an uncut piece of schorl during frequency scanning.

21. Method according to any of claims 19 or 20, wherein the frequency scanning of solution B is implemented systematically from 0 to 10¹³ Hz and has a duration of about 8 minutes.

22. Method according to claim 21, wherein the solution B contains a cut piece of quartz crystal during the frequency scanning.

23. Method according to any of claims 19 to 22, wherein the step comprised of solution C resting under vacuum has a duration of at least 72 hours.

24. Method according to any of claims 19 to 23, wherein the step C is implemented at a temperature of 35 °C.

25. Method according to any of claims 10 to 24, wherein after resting, the solution C is entrapped into at least one matrix or is encapsulated into at least one capsule (10).

## Patentansprüche

1. Vorrichtung zur Resonanzentkopplung zum Schutz des menschlichen oder tierischen Körpers, umfassend eine Haltevorrichtung, die dazu bestimmt ist, bei Verwendung vorzugsweise in Berührung mit dem Körper platziert zu werden, wobei die Haltevorrichtung mindestens einen Komplex von Kolloidsystemen in dispergierter Phase umfasst, wobei die Kolloidsysteme aus behandelten und kadenzierten Polymeren bestehen und kumulativ die folgenden Mizellen umfassen: (CaNa) (2Al₅) (Si₅O₂₀) (6H₂O) und (CaNaMgFeAlTi) (SiAl) 2(O)₆.

2. Vorrichtung gemäß Patentanspruch 1, wobei die Haltevorrichtung ein Armband (11) darstellt.

3. Vorrichtung gemäß Patentanspruch 1, wobei die Haltevorrichtung einen Schmuckartikel, wie typischerweise eine Armbanduhr, eine Kette, einen Ohrring, Brillengläser oder eine Gürtelschnalle, darstellt.

4. Vorrichtung gemäß Patentanspruch 1, wobei die Haltevorrichtung ein Möbelstück, wie typischerweise einen Tisch, einen Stuhl, eine Lampe oder eine Wanduhr, darstellt.

5. Vorrichtung gemäß Patentanspruch 1, wobei die Haltevorrichtung ein Konfektionsartikel, wie typischerweise eine Kleidung, einen Schuh, einen Hut oder eine Mütze, darstellt.

6. Vorrichtung gemäß Patentanspruch 1, wobei die Haltevorrichtung ein elektronisches und/oder elektrisches Gerät, wie typischerweise einen Rechner, ein Telefon, insbesondere ein tragbares Telefon, ein elektronisches Spiel, einen Kopfhörer oder einen Lautsprecher, insbesondere einen tragbarer Lautsprecher, darstellt.

7. Vorrichtung gemäß einem der vorherigen Patentansprüche, wobei die Kolloidsysteme in einer Matrix eingefangen oder in einer Kapsel (10) angeordnet sind.

8. Vorrichtung gemäß einem der vorherigen Patentansprüche, wobei die Kolloidsysteme Mizellen einer Größe von weniger als oder gleich 0,001 Mikron enthalten.

9. Vorrichtung gemäß einem der vorherigen Patentansprüche, wobei die Kolloidsysteme unter Verwendung eines Wellenkomplexes von spezifischen modulierten Formen und einer geringeren Amplitude und einer höheren Frequenz als die charakteristische Trägerwelle kadenziert ist, welche in Bezug auf ein oder mehrere elektronische und/oder elektrische Geräte, gegen die man sich schützen will, verwendet wird.

10. Verfahren zur Herstellung einer Vorrichtung zur Resonanzentkopplung zum Schutz des menschlichen oder tierischen Körpers, wobei eine Lösung A, enthaltend Xx425 ml einer Kolloidlösung umfassend mindestens die Mizellen (CaNa) (2Al₅) (Si₅O₂₀) (6H₂O), einer Sequenzabtastung spezifischer Frequenzen unterworfen wird, wobei danach eine Lösung B, enthaltend Xx425 ml einer Kolloidlösung umfassend mindestens die Mizellen (CaNaMgFeAlTi) (SiAl) 2(O)₆, einer Sequenzabtastung spezifischer Frequenzen unterworfen wird, wobei die Lösungen A und B gemischt werden, um eine Lösung C zu erhalten, und wobei die Lösung C unter Vakuum ruhen gelassen wird, wobei X eine Zahl ist.

11. Verfahren gemäß Patentanspruch 10, wobei die Kolloidsysteme Mizellen einer Größe von weniger als oder gleich 0,001 Mikron umfassen.

12. Verfahren gemäß Patentanspruch 10 oder 11, wobei die Kolloidsysteme unter Verwendung eines Wellenkomplexes spezifischer modulierter Formen und einer geringeren Amplitude und einer höheren Frequenz als die charakteristische Trägerwelle kadenziert wird, welche in Bezug auf ein oder mehrere elektronische und/oder elektrische Geräte, gegen die man sich schützen will, verwendet wird.

13. Verfahren gemäß einem der Patentansprüche 10 bis 12, wobei die Sequenzabtastung spezifischer Frequenzen der Lösung A mit einem Induktions-Frequenzgenerator von sinusförmigen und sukzessiven Wellen durchgeführt wird.

14. Verfahren gemäß einem der Patentansprüche 10 bis 13, wobei die Sequenzabtastung spezifischer Frequenzen der Lösung B mit einem Mikroimpuls-Frequenzgenerators mit Inverspolaritätsinduktoren unter Erzeugung einer Welle mit rechtwinkliger Modulation durchgeführt wird.

15. Verfahren gemäß einem der Patentansprüche 10 bis 14, wobei der Schritt des Ruhenlassens der Lösung C im Vakuum mindestens 24 Stunden dauert.

16. Verfahren gemäß einem der Patentansprüche 10 bis 15, wobei dieses bei einer Temperatur von 25 °C durchgeführt wird.

17. Verfahren gemäß einem der Patentansprüche 13 bis 16, wobei die Abtastung der Lösung A gemäß definierter Sequenzen zwischen 0 und 2 GHz durchgeführt wird und ungefähr 20 Minuten dauert.

18. Verfahren gemäß einem der Patentansprüche 14 bis 17, wobei die Frequenzabtastung der Lösung B gemäß definierter Sequenzen, deren Grundträgerfrequenz 20 kHz nicht überschreitet, bei einer geeigneten Frequenz einer oder mehrere elektronischen Geräte durchgeführt wird und ungefähr 30 Minuten dauert.

19. Verfahren gemäß einem der Patentansprüche 13 bis 17, wobei die Frequenzabtastung der Lösung A systematisch zwischen 0 et 10¹³ Hz durchgeführt wird und ungefähr 8 Minuten dauert.

20. Verfahren gemäß Patentanspruch 19, wobei die Lösung A während der Frequenzabtastung ein Stück nicht geschliffenen Schörl enthält.

21. Verfahren gemäß einem der Patentansprüche 19 oder 20, wobei die Frequenzabtastung der Lösung B systematisch zwischen 0 à 10¹³ Hz durchgeführt wird und ungefähr 8 Minuten dauert.

22. Verfahren gemäß Patentanspruch 21, wobei die Lösung B während der Frequenzabtastung ein geschliffenes Stück Quarzkristall enthält.

23. Verfahren gemäß einem der Patentansprüche 19 bis 22, wobei der Schritt des Ruhenlassens der Lösung C im Vakuum mindestens 72 Stunden dauert.

24. Verfahren gemäß einem der Patentansprüche 19 bis 23, wobei der Schritt C bei einer Temperatur von 35 °C durchgeführt wird.

25. Verfahren gemäß einem der Patentansprüche 10 bis 24, wobei die Lösung C nach dem Schritt des Ruhenlassens in mindestens eine Matrix eingefangen oder in mindestens eine Kapsel (10) eingekapselt wird.
